# EUROPÄISCHE PATENTSCHRIFT

(11) **EP 1 832 370 B1**
(45) Veröffentlichungstag und Bekanntmachung des Hinweises auf die Patenterteilung: **01.10.2008**
(21) Anmeldenummer: 06004800.6
(22) Anmeldetag: 09.03.2006
(51) Int. Cl.: B23F 19/00, B24B 31/00, F16H 55/06, C23C 22/83, C23F 3/00

(54) **Verfahren zur Fertigung von evolventenförmigen Verzahnungen von Zahnrädern**
Process of manufacturing involute gear tooth system
Procédé de fabrication d'engrenages à développante de roues dentées

(43) Veröffentlichungstag der Anmeldung: 12.09.2007
(73) Patentinhaber: Winergy AG, 46562 Voerde (DE)
(72) Erfinder: Tenbrock, Stefan, 46397 Bocholt (DE)
(74) Vertreter: Radünz, Ingo

(56) Entgegenhaltungen:
- EP-A- 0 229 894
- EP-A- 1 350 601
- WO-A-20/04108356

## Beschreibung

Die Erfindung betrifft ein Verfahren zur Fertigung von evolventenförmigen Verzahnungen von Zahnrädern, insbesondere von Stirnrädern mit einer Profilmodifikation, mit den Merkmalen des Oberbegriffs des Anspruches 1.

Die Stirnräder mit Verzahnungen in Zahnradgetrieben übertragen die Drehbewegung von einem Antriebsstrang zu einem Abtriebsstrang und wandeln zudem die Drehzahlen der Stränge. Dabei berühren sich zwei gegenüberliegende Zahnflanken zweier Räder. Die kontinuierliche Drehung der Räder führt zu einer kontinuierlichen Änderung des geometrischen Orts der Berührung entlang der Eingriffslinie. Ebenso ändern sich kontinuierlich die beteiligten Teilbereiche der Flanken an der Übertragung vom Beginn des Eingriffs bis zur Trennung der Flanken. Nacheinander übertragen auf diese Weise alle am Umfang angeordneten Zähne einen Teil der Drehung.

Die kontinuierliche Veränderung der geometrischen Parameter darf nicht zu einer periodisch veränderlichen Übersetzung führen. Insbesondere die Flankenform einer Evolvente kompensiert solche Veränderungen derart, dass die Übersetzung unabhängig von den zeitlich veränderlichen geometrischen Parametern konstant bleibt. Die Übersetzung des Getriebes hängt nur noch vom Verhältnis der Zähnezahlen ab. Darüber hinaus ermöglichen weitere vorteilhafte Eigenschaften einer sochen Geometrie eine flexible Anpassung an ähnliche Ausgangsbedingungen.

Zur Erfüllung der Aufgabe der Übertragung von Drehbewegungen sind vielfältige Formen von evolventenförmigen Gerad- und Schrägverzahnungen, insbesondere für Stirnrad-, Kegelrad- und Planetengetriebe, bekannt. Besonders vorteilhaft an solchen Verzahnungen ist die einfache Herstellbarkeit.

Als äußerst wirtschaftlich bei hohen Anforderungen an die Flankengüte hat sich das kontinuierliche Wälzfräsen durchgesetzt. Dabei schneidet ein Fräswerkzeug die Zähne mit den evolventenförmigen Flanken aus einem massiven Rohling heraus.

Stahlwerkstoffe für Stirnräder bieten hier neben hohen Festigkeitswerten den besonderen Vorteil, dass sich die Festigkeitswerte mittels einer Wärmebehandlung für die Fertigung auf einen niedrigen Wert und für die anschließende Verwendung in Getrieben auf einen hohen Wert einstellen lassen. Für die abschließende Erhöhung der Festigkeitswerte eignen sich die Fertigungsverfahren Vergüten, Nitrieren oder Einsatzhärten. Die Gefügeumwandlung im Werkstoff bei der Wärmebehandlung führt unter anderem zu einem Verzug, d. h. zu einer Abweichung von der idealen geometrischen Flankenform. Zusätzlich können von der Schneide des Werkzeugs weitere Fertigungsspuren als Abweichungen von der idealen Evolvente auf der Oberfläche verbleiben. Insgesamt ist die Oberfläche durch relativ hohe Rauheitswerte mit einer unregelmäßigen rilligen Struktur gekennzeichnet. Die charakteristischen Rauheitswerte als Maß für die Summe der Abweichungen von der idealen geometrischen Flankenform sind in der Regel bei industrieüblichen Fertigungsverfahren größer als Ra = 12,5 µm.

Die Abweichungen auf der tatsächlichen Flankenoberfläche bestimmen die Verzahnungsqualität. Aus der Festigkeitslehre ist bekannt, dass an hoch beanspruchten Bauteilen raue Oberflächen infolge der Kerbwirkung zu einem vorzeitigen Versagen führen. Die einschlägigen Berechnungsmethoden berücksichtigen diesen Sachverhalt und streben aus diesem Grund eine möglichst hohe Verzahnungsqualität mit geringen Rauheitswerten zwischen Ra = 0,8 bis 1,6 µm an. Eine solche Güte lässt sich in einem weiteren Arbeitsschritt nach dem Fräsen und Härten durch das Schleifen oder Läppen erzielen. Eine darüber hinausgehende Verringerung der Oberflächengüte lässt sich nur mit erheblich längeren Bearbeitungszeiten erreichen. Dabei besteht die Gefahr, dass die zulässigen Temperaturen zwischen der rotierenden Schleifscheibe und Zahnflanke überschritten werden und zu Spannungsrissen oder durch lokales Anlassen zu einer Erweichung der Oberfläche führen. Ein solcher Effekt wird auch als Schleifbrand bezeichnet.

Die EP 1 167 825 A2 gibt ein Verfahren an, wie sich die übliche Oberflächengüte einer evolventenförmigen Zahnflanke von Ra = 0,8 bis 1,6 µm durch die Anwendung des chemisch beschleunigten Gleitschleifens auf Rauheitswerte von Ra = 0,127 µm bis 0,254 µm verringern lässt. Die gleichmäßige Glättung der Flanke um durchschnittlich 1 µm führt zu einer Erhöhung der tragenden Flankenfläche.

Bei dem Verfahren des chemisch beschleunigten Gleitschleifens nach EP 0 414 441 A2 werden die Werkstücke zusammen mit einer chemischen Spezialflüssigkeit und einer Mischung von Feststoffen in einem Behälter in Vibration versetzt. Die Spezialflüssigkeit reagiert mit der blanken Metalloberfläche und bildet einen Film, der die metallisch blanken Rauheitsspitzen ummantelt. Die ummantelten Rauheitsspitzen werden dann von den nicht abrasiven Feststoffen abgetragen. Auf der blanken Metalloberfläche wird durch die Spezialflüssigkeit ein neuer Film gebildet, der wiederum durch die Feststoffe entfernt wird, bis die als maximal zulässig vorbestimmte Rauhigkeit erreicht ist.

Die WO 2004/108356 A1 lehrt, dass die Oberflächenrauheit von wälzgefrästen und anschließend zur Oberflächenglättung geschliffenen Flanken zu einer betriebssicheren Anwendung bei besonders hohen Anforderungen an die Standzeit nicht ausreicht. Erst in der Einlaufphase brechen einzelne verbliebene Rauheitsspitzen bei dem Kontakt zweier Flanken ab, gelangen somit in das Getriebeöl und tragen anschließend an allen geschmierten Kontaktbereichen zu einer erheblichen Schädigung bei.

Dem entsprechend verzichtet die WO 2004/108356 A1 auf die glättende Schleifbearbeitung und den deshalb zwingend notwendigen Einlaufvorgang zur finalen Oberflächenglättung. Stattdessen werden die Stirnräder mit den theoretisch-idealen wälzgefrästen evolventenförmigen Zahnflanken nach der Wärmebehandlung mit dem chemisch beschleunigten Gleitschleifen behandelt. Die Oberflächenglättung erfolgt mit einer an allen Stellen gleichbleibenden Abtragsrate über die gesamte metallische Oberfläche. Es wird ein Rauheitswert von Ra ≤ 0,25 µm angestrebt. Als weiteren Vorteil durch den Verzicht auf die Schleifbearbeitung erübrigt sich auch der Schleifbrandtest, der aufgrund temperaturüberhöhender Bearbeitungsfehler beim Schleifen erforderlich ist.

Aus der EP 1 350 601 B1 ist ein Verfahren bekannt, bei der eine unerwünschte störende spröde Deckschicht als Folge der Wärmebehandlung auf dem eigentlich gehärteten Grundwerkstoff entfernt wird. Auch hier wird das chemisch beschleunigte Gleitschleifen für den gleichmäßigen Abtrag von wenigen Mikrometern der Oberfläche eingesetzt und ein Rauheitswert von ca. Ra = 0,3 µm für die Rauheit erzielt.

Aus der EP 0 229 894 ist ein Verfahren gemäß dem Oberbegriff von Anspruch 1 bekannt.

Die bekannten Verfahren zur Glättung der Flanken durch die Oberflächenfeinbearbeitung des chemisch beschleunigten Gleitschleifens haben den entscheidenden Nachteil, dass ausschließlich nur ein gleichmäßiger, wenige Mikrometer betragender dünner Abtrag über die gesamte Oberfläche erfolgt. Flankenformfehler, die als Verzug bei der Wärmebehandlung mit lokal unterschiedlichen Beträgen auftreten können und größer sind als die genannten Abtragsraten, lassen sich nur glätten, aber nicht zielgerichtet lokal entfernen. Insbesondere der vollständige Verzicht auf die Schleifbearbeitung gemäß der WO 2004/108356 führt zu Verzahnungen, die ausschließlich Zahnflanken mit einem fehlerbehafteten Evolventenprofil aufweisen.

Eine wichtige bekannte Schwierigkeit bei der Gestaltung der idealen Flankenform bei hoch belasteten Verzahnungen ist die Berücksichtigung der elastischen Verformung der Zähne unter der Betriebslast. Insbesondere an Stellen, an denen am Beginn oder Ende des Eingriffs von zwei gleichzeitig kämmenden Zahnpaaren zu nur einem kämmenden Zahnpaar übergegangen wird, ändert sich die spezifische Zahnbelastung und damit auch die elastische Verformung sprungförmig. Die Eingriffsstörungen treten am Zahnkopf bzw. Zahnfuß auf. Darüber hinaus verformt sich unter Last der gesamte Wellenstrang, so dass es auch über der Zahnbreite zu einem unterschiedlichen elastizitätsbedingten Tragbild kommt.

Solche Verformungen lassen sich vorab rechnerisch bestimmen und können durch lokal begrenzte Modifikationen am idealen Evolventenprofil ausgeglichen werden. Die Korrekturwerte betragen in Abhängigkeit vom Modul im Mittel 10 bis 50 µm und liegen mit einer Zehnerpotenz deutlich höher über den Werten, die mit dem chemisch beschleunigten Gleitschleifen erreichbar sind. Zudem erfolgen die Korrekturrücknahmen mit definiert zunehmenden Abtragsraten in Form von linearen oder parabolischen Kurvenbahnen. Solche begrenzten und örtlich veränderlichen Abtragsraten können nicht mit dem gleichmäßig äquidistanten Abtrag des Gleitschleifens hergestellt werden.

Durch das Schleifen der Zahnflanke mit einer rotierenden Schleifscheibe lassen sich die Abweichungen aus der Fertigung und die berechneten lokalen Modifikationen definiert auf die Zahnflanken bringen. Die gewünschten Abtragsraten lassen sich über den Vorschub von Werkzeug und Werkstück steuern. Die Flächen der Rücknahmen weisen im Gegensatz zur Evolventenflanke eine andere räumliche Wölbung auf. Der Übergang zwischen den aneinandergrenzenden Teilflächen der Zahnflanke ist als unerwünschte Kantenlinie messtechnisch nachweisbar. Eine solche Kante wirkt sich in einer ölgeschmierten Wälzpaarung zweier Zahnflanken aufgrund des scharfkantigen Charakters nachteilig auf die hydrodynamischen Schmierverhältnisse aus. Ebenso nachteilig entsteht am radialen und stirnseitigen Austritt der Schleifscheibe aus dem Werkstück ein weiterer erkennbarer Grat, der zu Beschädigungen an der Gegenflanke führen kann.

Der Erfindung liegt die Aufgabe zugrunde, das gattungsgemäße Verfahren zur Fertigung einer Evolventenverzahnung mit Profilmodifikation so zu gestalten, dass an dem Übergang von der idealen Evolventenflanke zu den modifizierten Flächenstücken asymptotisch kein erkennbarer Grat verbleibt.

Die Aufgabe der Erfindung wird bei einem gattungsgemäßen Verfahren erfindungsgemäß durch die kennzeichnenden Merkmale des Anspruchs 1 gelöst. Vorteilhafte Ausgestaltungen der Erfindung sind Gegenstand der Unteransprüche.

Ein außen- oder innenverzahntes Zahnrad wird mit einer gewissen Bearbeitungszugabe durch Wälzfräsen hergestellt. Eine anschließende für den jeweiligen Werkstoff geeignete Wärmebehandlung erhöht die Festigkeitswerte der Verzahnung. Die Oberfläche der harten Zahnflanke wird mittels einer rotierenden Schleifscheibe abschließend in Form und Oberflächengüte fein bearbeitet. Auf eine umständliche Kantenverrundung durch die Werkzeugführung kann verzichtet werden und führt zu einer Verkürzung der Bearbeitungsdauer. Damit reduziert sich auch die Gefahr der Schleifbrandbildung.

Die verzahnten und flankenmodifizierten Zahnräder werden im Unterschied zum Stand der Technik in einem letzten Bearbeitungsschritt mit dem bekannten chemisch beschleunigten Gleitschleifen behandelt.

Eine an die Bauteilgeometrie und Behandlungsziele angepasste Prozessführung führt zunächst durch die Schleifwirkung der nicht abrasiven Feststoffe zu einem vorrangigen Abtrag der Grate an den Flankenrändern und einer asymptotischen Nivellierung der Kanten in der Zahnflanke zwischen benachbarten Flächenstücken. Die unerwünschten Oberflächenfehler werden solange durch die festen Schleifsubstanzen unmittelbar entfernt, bis die Größenverhältnisse zwischen den schleifenden Feststoffen und dem überzähligen Material eine bestimmte Größe unterschreiten.

Erst ab dem Punkt der Unterschreitung der vorbestimmten Größe des überzähligen Materials unterstützt die chemische Spezialflüssigkeit den Trennvorgang, indem die verbliebenen Erhebungsreste von der Substanz fortwährend ummantelt werden. Ein solcher Effekt ermöglicht den Schleifkörpern die Fortsetzung des Glättungsvorgangs. Zeitgleich zur Behandlung der Kanten werden auch auf allen Bauteiloberflächen die Rauheitsspitzen als Folge der Wechselwirkung zwischen den Spitzen, der Spezialflüssigkeit und den Schleifkörpern entfernt. Nach Abschluss der Behandlung weist die Oberfläche Rauheitswerte von Ra = 0,3 - 0,4 µm auf.

Die Erfindung und die mit der Erfindung verbundenen Vorteile werden nachfolgend an einem in der Zeichnung dargestellten Ausführungsbeispiel näher erläutert. Es zeigen:
- Fig. 1: einen Ausschnitt auf eine Verzahnung mit Evolventenflanken nach dem Stand der Technik,
- Fig. 2: eine Ansicht auf eine modifizierte Verzahnung,
- Fig. 3: eine Ansicht eines kämmenden Zahnpaares,
- Fig. 4: einen vergrößerten Ausschnitt auf den Zahneingriff.

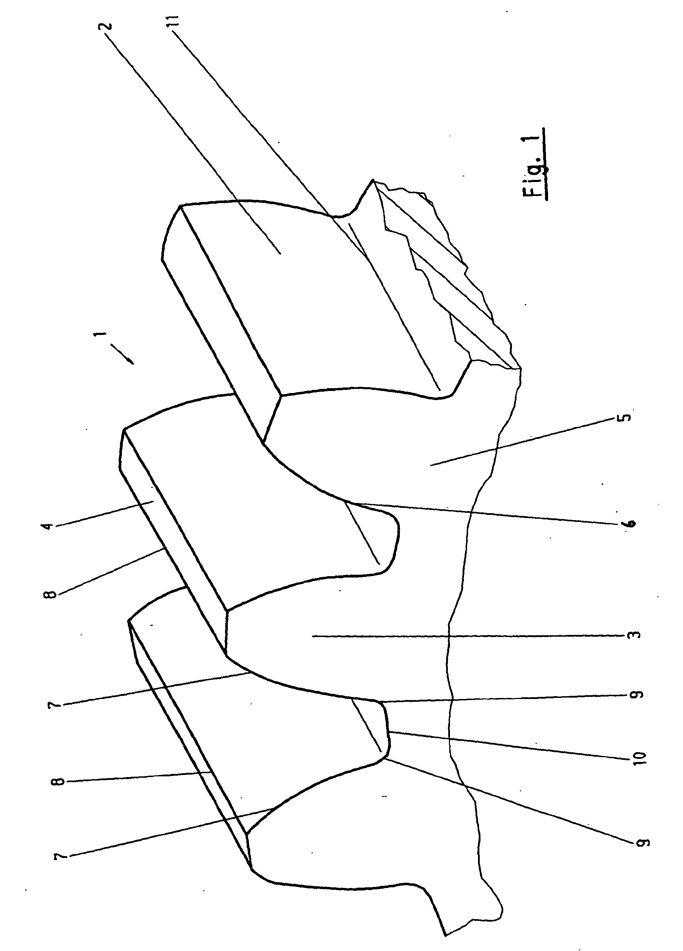

Fig. 1 zeigt einen Ausschnitt auf eine Verzahnung 1 mit Evolventenflanken 2 nach dem Stand der Technik. Zur Verdeutlichung des bekannten Ausführungsbeispiels sind die Darstellungen auf den wesentlichen Informationsgehalt reduziert. Die eingezeichneten Verhältnisse sind lediglich zur deutlichen Erklärung nicht maßstabsgetreu vergrößert wiedergegeben.

Von einem nicht dargestellten Wälzfräser werden Zähne 3 in einem kontinuierlichen Schneidvorgang aus einem massiven vorbearbeiteten zylindrischen Rohling herausgearbeitet. Ein Kopfkreis 4 und Stirnseiten 5 sowie nicht dargestellte Spannbohrungen sind in einer vorgeschalteten Bearbeitungsstation mit den vorgegebenen Konstruktionsmaßen hergestellt worden. Das Fräswerkzeug erzeugt zwischen den Zähnen den Freiraum, der von einer Kantenlinie 6 begrenzt ist.

Die Kantenlinie 6 setzt sich aus mehreren Abschnitten zusammen. An einer ersten Zahnflanke beginnt die ideale Kurve einer Evolvente 7 an einer Kopfkreiskante 8 und führt zu einer Fußausrundung 9, die wiederum in einen Fußkreis 10 übergeht. An der rückwärtigen Flanke des benachbarten Zahns setzt sich die Kantenlinie 6 in der gleichen Weise fort.

In Abhängigkeit von den Verzahnungsdaten kann das Fräswerkzeug die Fußausrundung 9 so gestalten, dass ein Fußfreischnitt mit einer ausgeprägten Fußkante 11 als Übergang zur Evolventenflanke 2 entsteht. Vorteilhafterweise lässt sich der Überstand der Evolventenflanke 2 gegenüber der Fußausrundung 9 als Bearbeitungszugabe für die nachfolgende Schleifbearbeitung nutzen. Insbesondere lässt sich dadurch eine weitere Schleifkerbe durch die verwendete Schleifscheibe im Zahnfuß verhindern. Andere gezielte Modifikationen an der Verzahnung lassen sich mit dem Wälzfräsen nicht herstellen.

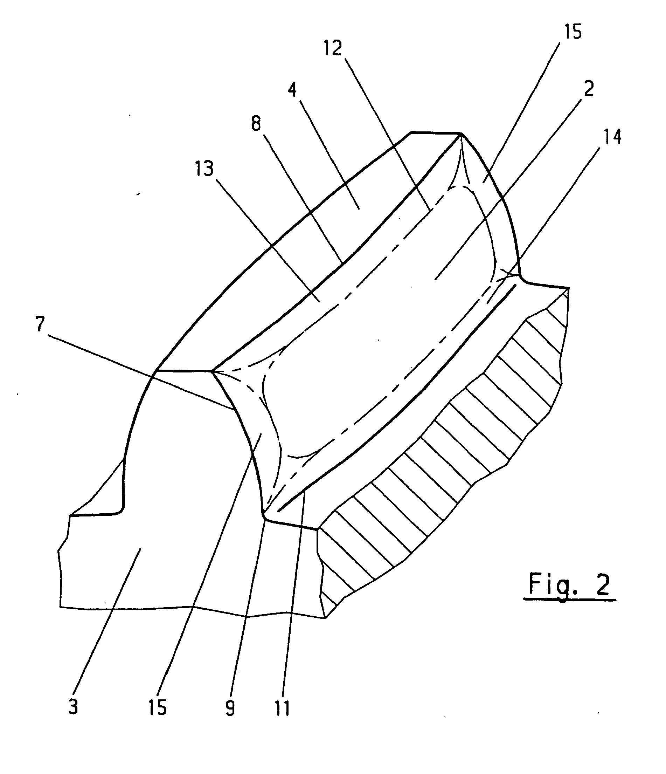

Fig. 2 zeigt den Zahn 3 nach dem Stand der Technik, der nach dem Fräsen der Evolventenverzahnung, einer Wärmebehandlung und einem abschließenden Schleifen der Flankenmodifikationen fertig bearbeitet ist. Strichpunktierte Linien 12 illustrieren nur die qualitativen Übergänge einzelner Abschnitte auf der Zahnflanke und verdeutlichen die unterschiedlichen Teilflächen mit ihren Übergängen zueinander. Die genaue Lage der Übergänge auf der Zahnflanke lässt sich nur mit empfindlichen Meßgeräten bestimmen. Einen großen Teil der Fläche bildet immer noch die nicht modifizierte Evolventenflanke 2. Die Zahnflanke wird in der Höhe von den Abschnitten der Kopfrückanhme 13 und Fußrücknahme 14 und an den seitlichen Rändern von den Bereichen der Flankenlinienrücknahme 15 begrenzt.

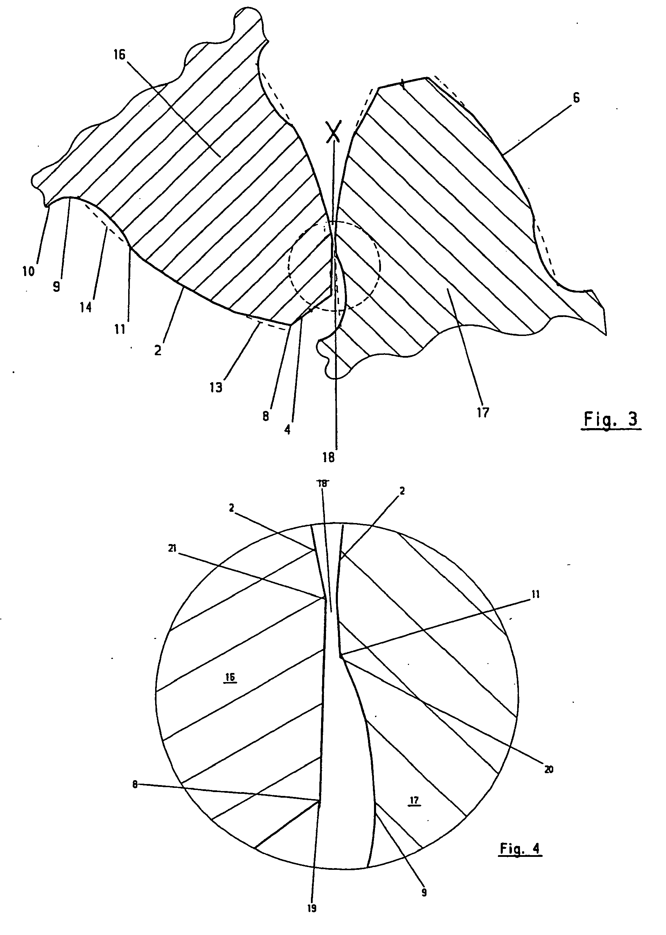

In Fig. 3 ist ein Schnitt durch zwei miteinander kämmende Zähne 16 und 17 mit Profilmodifikation dargestellt. An den Zähnen sind entlang der Kantenlinie 6 als Teilabschnitte der Fußkreis 10, die Fußausrundung 9, die Fußkante 11, die Evolventenflanke 2 und die Kopfkreiskante 8 dargestellt. Im Fußbereich zeigt die gestrichelte Linie die Fußrücknahme 14 und am Zahnkopf die lineare Kopfrücknahme 13. Diese Modifikationen wurden durch das Zahnschleifen abgetragen. Der Kontakt zwischen den Zähnen im Ausschnitt X weist nur zeichnerisch einen erkennbaren Spalt 18 auf, um zu verdeutlichen, dass sich zwischen den tragenden Flanken ein nicht dargestellter Ölfilm befindet.

Fig. 4 zeigt als Ausschnitt X den Kontaktbereich zweier Zähne 16 und 17. Durch die Kopfrücknahme 13 werden von dem Zahn durch die Schleifscheibe größere Mengen des Zahnwerkstoffs abgetrennt. Insbesondere am Scheibenauslauf zum Kopfkreis 8 kann ein Grat 19 entstehen, der größer als die normale Zahnrauhigkeit ist. Durch die Vorschubsteuerung der Schleifscheibe wird zwar häufig eine Verrundung angestrebt, die aber zu einer unwirtschaftlichen Erhöhung der Bearbeitungsdauer führt. Ebenso kann am unteren Auslauf an der Fußkante 11 eine weitere Gratbildung 20 beobachtet werden.

Die lineare Kopfrücknahme geht in einem Punkt 21 in die Evolventenflanke 2 über. In dem Spalt 18 bildet sich durch das anwesende Schmieröl ein tragender hydrodynamischer Schmierfilm aus. Aus Überlegungen zur Theorie der Hydrodynamik lässt sich folgern, dass schon kleine Unstetigkeiten in der Wandrauhigkeit, wie hier im Punkt 21, erhebliche Störungen in dem Strömungszustand eines Schmierfilms bewirken.

Die Auswirkungen sowohl der Gratbildung 19 und 20 und die Störung in dem Schmierfilm werden bei normaler industrieüblicher Belastung von anderen Einflüssen überdeckt. Gerade bei Verzahnungen für höchste Belastungen in Getrieben für Windkraftanlagen sind diese Fehlerquellen mit hoher Sicherheit auszuschalten. Die hier übliche Paarung von einsatzgehärteten Planetenverzahnungen und dazu weicheren vergüteten Hohlrädern kann zu einer Beschädigung mit abrasivem Verschleiß der Flankenflächen 2 führen. Die relativ geringen Drehzahlen erfordern zudem besondere Maßnahmen zur sicheren Ausbildung des Schmierfilms zwischen den Flanken.

Im Anschluss an das Schleifen der flankenmodifizierten Verzahnung wird als letzter Bearbeitungsschritt das z. B. aus der EP 0 414 441 A2 bekannte und eingangs beschriebene chemisch beschleunigte Gleitschleifen durchgeführt. Dabei werden die Zahnräder innerhalb eines in Vibration versetzten Behälters mit einer chemischen Spezialflüssigkeit, die mit nicht abrasiven Feststoffen versetzt ist, auf chemischer und mechanischer Art behandelt. Im Zuge der Behandlung werden die Grate 19, 20 und die Unstetigkeit im Punkt 21, die durch das Einbringen der Profilmodifikation an den Übergängen der aneinander angrenzenden Flankenkanten von Kopfkreis 8 und Fußkante 9 entstanden sind, in sich mehrfach wiederholenden Schritten entfernt. Das Gleitschleifen wird solange fortgesetzt, bis die Übergänge asymptotisch nivelliert und die Zahnflanken auf vorbestimmte Rauwerte von durchschnittlich Ra = 0,3 bis 0,4 µm geschliffen sind.

## Patentansprüche

1. Verfahren zur Fertigung von evolventenförmigen Verzahnungen von Stirn Zahnrädern, insbesondere aus Einsatzstahl, Vergütungsstahl oder Nitrierstahl, insbesondere für Getriebe von Windkraftanlagen, bei welchem Verfahren die Stirnräder wälzgefräst, wärmebehandelt und mit einer durch Schleifen eingebrachten, von der Evolventenform abweichenden, als Kopf-, Fuß- und Flankenlinienrücknahme (13, 14, 15) ausgebildeten Profilmodifikation ausgestattet werden, **dadurch gekennzeichnet, dass** die Stirnräder einem chemisch beschleunigten Gleitschleifen mit einer chemischen Spezialflüssigkeit und nicht abrasiven Schleifkörper unterworfen werden, dass eine Gratbildung an den die Profilmodifikation begrenzenden Flankenkanten (12) durch eine aufeinanderfolgende Beeinflussung einerseits durch die nicht abrasiven Schleifkörper an den Graten und andererseits durch nachträglich eintretende Wirkung der chemischen Spezialflüssigkeit an den Gratresten abgetragen wird und dass die Flankenkanten (12) zwischen unterschiedlich gewölbten Teilflächen in der Zahnflanke asymptotisch nivelliert werden.

2. Verfahren nach Anspruch 1 **dadurch gekennzeichnet, dass** die Zahnflanken auf Rauwerte von durchschnittlich Ra = 0,3 bis 0,4 µm geschliffen werden.

## Claims

1. Process for manufacturing of involute-shaped toothings of spur gears, in particular of case-hardened steel, annealed steel or nitrided steel, in particular for gear units of wind power plants, in which process the spur gears are hob cut, heat treated and provided with a profile modification in the form of head, foot, and alignment relief (13, 14, 15) which deviates from the involute shape and is achieved by grinding, **characterized in that** the spur gears are subjected to a chemically accelerated vibratory grinding with a special chemical liquid and non-abrasive tools, that burring at tooth traces (12) which delimit the profile modification is removed at the burr rests through successive influencing, on the one hand, by the non-abrasive tools at the burrs and, on the other, by the subsequent effect of the special chemical liquid, and that tooth traces (12) are asymptotically leveled between differently curved reference surfaces in the tooth flank.

2. Process according to claim 1, **characterized in that** the tooth flanks are ground to average roughness values of Ra = 0, 3 to 0,4 µm.

## Revendications

1. Procédé pour la fabrication de dentures en développante pour des roues dentées droites, en particulier en acier cémenté, en acier traité ou en acier nitruré, en particulier pour transmissions d'éoliennes, procédé selon lequel les roues dentées droites sont taillées en développantes, soumises à un traitement thermique et pourvues d'une modification de profil réalisée sous la forme de dépouilles de lignes de tête, de pied et de flanc (13, 14, 15) exécutées par meulage, divergeant de la développante, **caractérisé en ce que** les roues dentées droites sont soumises à un ponçage chimiquement accéléré avec un liquide chimique spécial et des meules non abrasives, **en ce qu'**une formation de bavures sur les bords de flancs (12) limitant la modification de profil est enlevée sous l'effet successif des meules non abrasives, sur les bavures, d'une part, et sous l'action ultérieure du liquide chimique spécial, sur les restes de bavures, d'autre part, et **en ce que** les bords de flancs (12) entre des portions de surface de courbure différente sont nivelés de manière asymptotique.

2. Procédé selon la revendication 1, **caractérisé en ce que** les flancs des dents sont meulés jusqu'à un indice de rugosité moyen Ra = 0,3 à 0,4 mm.
